# EUROPEAN PATENT APPLICATION

(11) **EP 3 200 075 A1**
(43) Date of publication of application: **02.08.2017**
(21) Application number: 17152019.0
(22) Date of filing: 18.01.2017
(51) Int. Cl.: G06F 9/48, H04L 12/28

(54) **METHOD AND DEVICE FOR CALLING PROCESS**

(30) Priority: 29.01.2016 CN 201610066816
(71) Applicant: Beijing Xiaomi Mobile Software Co., Ltd., Beijing 100085 (CN)
(72) Inventor: REN, Qiao, BEIJING, 100085 (CN); ZHAO, Ming, BEIJING, 100085 (CN); HOU, Enxing, BEIJING, 100085 (CN)
(74) Representative: Cougard, Jean-Marie

(57) **Abstract**

A method and device for calling a process are provided in the disclosure, which belongs to a technical field of terminal. The method includes: setting (101) a call frequency for a process to be called which is associated with a designated application, based on a usage state of the designated application; and calling (102) the process to be called based on the call frequency. A call frequency for a process to be called which is associated with a designated application is set based on the usage state of the designated application, and then the process to be called is called based on the call frequency. The frequency may be adjusted automatically by controlling a change of the call frequency for the process based on a change of state.

## Description

### FIELD

The present disclosure relates to a technical field of terminal, and more particularly, to a method and device for calling a process.

### BACKGROUND

Applications with various kinds of functions have being developed by developers to meet requirements of users. After being initiated in a terminal under control of a user, an application could call a requested process based on a preset call frequency to complete a designated function of the application.

### SUMMARY

In view of the fact in related arts, a method and device for calling a process are provided by the present disclosure. The technical solutions are set forth as follows.

According to a first aspect of embodiments of the present disclosure, a method for calling a process is provided. The method may be implemented by a device. The method may include: setting a call frequency for a process to be called which is associated with a designated application, based on a usage state of the designated application; and calling the process to be called based on the call frequency.

In a particular embodiment, setting the call frequency for the process to be called which is associated with the designated application based on the usage state of the designated application may include: monitoring the usage state of the designated application; acquiring, when the usage state of the designated application is changed, a call frequency corresponding to the changed usage state of the designated application; and setting the call frequency for the process to be called which is corresponding to the designated application based on the call frequency corresponding to the changed usage state of the designated application.

In a particular embodiment, the usage state may include any one of a foreground state, a background state and an off state.

In a particular embodiment, a call frequency corresponding to the foreground state is higher than a call frequency corresponding to the background state; the call frequency corresponding to the background state is higher than a call frequency corresponding to the off state.

In a particular embodiment, after calling the process to be called according to the call frequency, the method further may include: storing data acquired after the process to be called is called, when the changed usage state of the designated application is the off state; acquiring the stored data acquired after the process to be called is called, when the usage state of the designated application is changed from the off state to a foreground state.

In one particular embodiment, the steps of the method for calling a process are determined by computer program instructions.

Consequently, according to a particular embodiment, the invention is also directed to a computer program for executing the steps of a method for calling a process as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a second aspect of embodiments of the present disclosure, a device for calling a process is provided. The device may include: a setting module for setting a call frequency for a process to be called which is associated with a designated application, based on a usage state of the designated application; and a calling module for calling the process to be called based on the call frequency.

In a particular embodiment, the setting module may include: a monitoring unit for monitoring the usage state of the designated application; a acquiring unit for acquiring, when the usage state of the designated application is changed, a call frequency corresponding to the changed usage state of the designated application; and a setting unit for setting the call frequency for the process to be called which is corresponding to the designated application based on the call frequency corresponding to the changed usage state of the designated application.

In a particular embodiment, the usage state may include any one of a foreground state, a background state and an off state.

In a particular embodiment, a call frequency corresponding to the foreground state is higher than a call frequency corresponding to the background state; the call frequency corresponding to the background state is higher than a call frequency corresponding to the off state.

In a particular embodiment, the device further may include: a storing module for storing data acquired after the process to be called is called, when the changed usage state of the designated application is an off state; and a acquiring module for acquiring the stored data acquired after the process to be called is called, when the usage state of the designated application is changed from the off state to a foreground state.

According to a third aspect of embodiments of the disclosure, a device for calling a process is provided. The device may include: a processor; and a memory for storing instructions executable by the processor; wherein the processor is configured to set a call frequency for a process to be called which is associated with a designated application, based on a usage state of the designated application; and call the process to be called based on the call frequency.

Embodiments of the present disclosure may provide at least some of the following beneficial effects.

A call frequency for a process to be called which is associated with a designated application is set based on the usage state of the designated application, and then the process to be called is called based on the call frequency. The frequency may be adjusted automatically by controlling a change of the call frequency for the process based on a change of state, so as to achieve effects of calling timely and efficiently in a working state, saving resources and reducing consumption in a non-working state, and acquiring the required data for the designated application in an off state.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for calling a process according to an exemplary embodiment;
Fig. 2 is a flow diagram illustrating a method for calling a process according to an exemplary embodiment;
Fig. 3 is a flow diagram illustrating a method for calling a process according to an exemplary embodiment;
Fig. 4 is a block diagram illustrating a device for calling a process according to an exemplary embodiment;
Fig. 5 is a block diagram illustrating a setting module in the device for calling a process according to an exemplary embodiment; and
Fig. 6 is a block diagram illustrating a device for calling a process according to an exemplary embodiment (a basic structure of a mobile terminal).

### DETAILED DESCRIPTION

In order to make the purpose, the technical solution and advantages of the present disclosure even clearer, reference will now be made in detail to exemplary embodiments in junction with the accompanying drawings.

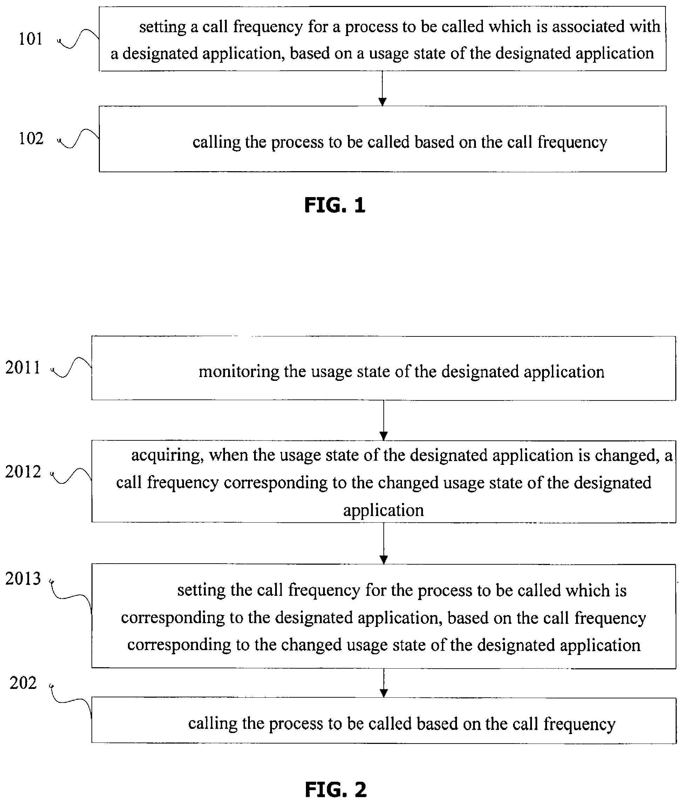

Fig. 1 is a flow diagram illustrating a method for calling a process according to an exemplary embodiment. The method for calling a process may be implemented by a terminal or a device, and may include the following steps.

In step 101, a call frequency for a process to be called which is associated with a designated application is set based on a usage state of the designated application;

In step 102, the process to be called is called based on the call frequency.

In embodiments of the present disclosure, a call frequency for a process to be called which is associated with a designated application is set based on the usage state of the designated application, and then the process to be called is called based on the call frequency. The frequency may be adjusted automatically by controlling a change of the call frequency for the process based on a change of state, so as to achieve effects of calling timely and efficiently in a working state, saving resources and reducing consumption in a non-working state, and acquiring the required data for the designated application in an off state.

Fig. 2 is a flow diagram illustrating a method for calling a process according to an exemplary embodiment. The method for calling a process may be implemented by a terminal or a device, and may include following steps.

In step 201, a call frequency for a process to be called which is associated with a designated application is set based on the usage state of the designated application.

A list of applications storing respective identifications of the designated applications is preset in a terminal. When a designated application in the list of applications is detected in the terminal, execution of the method for calling a process on the designated application is started according to the embodiment of the present disclosure.

In a particular example, users may perform a add operation in the list of applications manually such that they can control based on their own needs.

A usage state of the designated application may be preset in the terminal, which may include but not limited to any one of a foreground state, a background state, and an off state.

The foreground state is the state that the designated application is in use after the designated application is initiated (or activated); the background state is the state that the designated application is not in use but another application is in use after the designated application is initiated (or activated); the off state is the state that the designated application is not initiated (in a deactivated state). A designated application may be in the off state when it is initiated and later closed by a close command issued by the system or the user.

A call frequency corresponding to each usage state is preset in the terminal such that the call frequency for calling a process to be called may have the shortest period and the fastest rate when the designated application is in the foreground state; the period of the call frequency for calling the process to be called increases and the rate decreases when the designated application is in the background state; and the call frequency for calling the process to be called has the longest period and the lowest rate when the designated application is in the off state.

In a particular example, a call frequency corresponding to each designated application in each usage state may be set separately; or a same call frequency corresponding to all the designated applications in each usage state may be set uniformly; besides, the call frequency corresponding to each designated application in each usage state may be set manually by the user.

Therefore, the usage state of the designated application may be monitored, and the call frequency may be reset when the call frequency of the designated application is changed. Accordingly, step 201 may be implemented by the following steps.

In step 2011, the usage state of the designated application may be monitored.

In step 2012, when the usage state of the designated application is changed, the call frequency corresponding to the changed usage state of the designated application is acquired.

Changes of the usage state of the designated application may include the following states.

After the designated application is initiated from the off state, the usage state is the foreground state at the moment.

After the designated application is initiated, if the user operates the HOME button of the terminal such that the designated application enters into the background mode, the usage state is the background state at the moment.

After the designated application is initialed, if the user operates a close button and the designated application is closed, the usage state is the off state at the moment.

After the designated application is initialed, if the user performs the operation of forcibly clearing up memories when the designated application is in the background state, such that the designated application is closed, the usage state is in the off state at the moment.

When the designated application is in the background state, if the user initiates the designated application by an operation, the usage state is the foreground state at the moment.

In step 2013, the call frequency for the process to be called which is corresponding to the designated application is set based on the call frequency corresponding to the changed usage state of the designated application.

In step 202, the process to be called is called based on the call frequency.

With respect to each of the designated applications in the list of applications, the processes to be called in each designated application which requires process control are preset in the terminal as needed, it is not all the processes involved in the designated application which are required to be called based on the call frequency.

In a particular example, users may manually set a certain process in a certain designated application as a process to be called.

In embodiments of the disclosure, the relationship between the states is as follows:
the call frequency corresponding to the foreground state is higher than the call frequency corresponding to the background state;
the call frequency corresponding to the background state is higher than the call frequency corresponding to the off state.

By setting different call frequency for different usage state, the following functions may be achieved: when the designated application is in the foreground state, the process to be called is in the state of being called and can be called timely and effectively to achieve the function corresponding to the process; when the designated application is in the background state, the process to be called is in the state of being called but the call frequency is decreased to reduce the resource consumption; when the designated application is in the off state, the process to be called is still in the state of being called but the call frequency may be further decreased such that a certain function of the designated application may continue to work normally, and when the designated application is restarted, it can timely acquire the data acquired by the process when the designated application is in the off state.

For example, an intelligent control application may control various intelligent devices. In the intelligent control application, a scan interface is called based on a set call frequency to perform a scan to acquire a list of online devices in the Local Area Network (LAN).

When the intelligent control application is in the foreground state, the scan is required to be performed frequently to update the list of the online devices in the current LAN, so the call frequency for the intelligent control application in the foreground state may be set to 1 time /1 second; when the intelligent control application is in the background state, the scan is not required to be performed frequently, so the call frequency of the intelligent control application in the background state may be set to 1 time /5 seconds; and when the intelligent control application is in the off state, the scan frequency may be decreased to a lower frequency to perform the scan, so the call frequency of the intelligent control application in the off state may be set to 1 time /60 second or the less.

In embodiments of the present disclosure, a call frequency for a process to be called which is associated with a designated application is set based on the usage state of the designated application, and then the process to be called is called based on the call frequency. The frequency may be adjusted automatically by controlling a change of the call frequency for the process based on a change of state, so as to achieve effects of calling timely and efficiently in a working state, saving resources and reducing consumption in a non-working state, and acquiring the required data for the designated application in an off state.

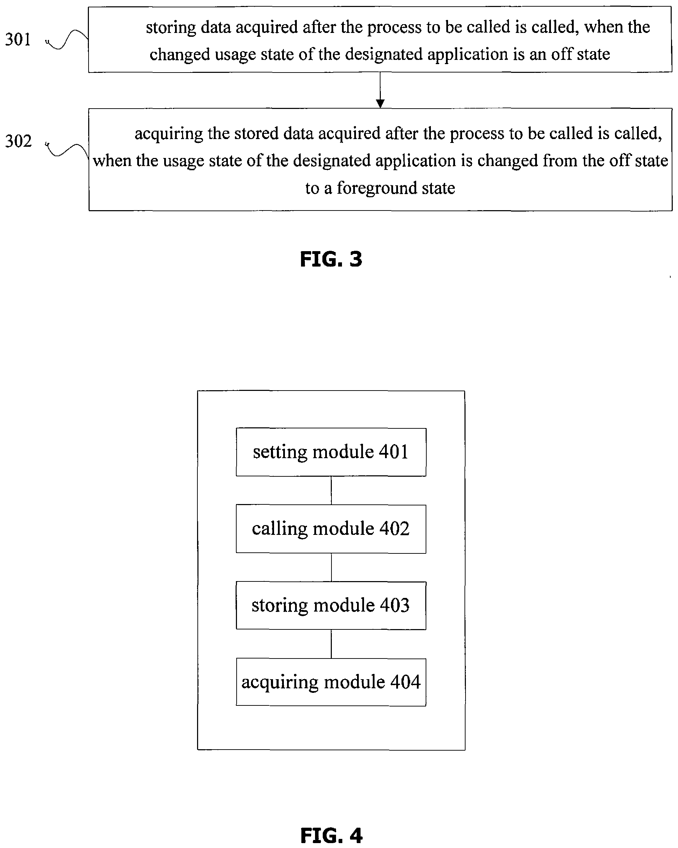

Fig.3 illustrates a method for calling a process according to an exemplary embodiment. The method for calling a process may be implemented by a terminal (or device) and may include following steps.

In step 301, when the changed usage state of the designated application is the off state, data acquired after the process to be called is called is stored.

When the designated application is in the off state, the process to be called, which is corresponding to the designated application, is still in the state of being called by the designated application and can still acquire the corresponding data after being called. However, the designated application would not acquire the data from the process when it's not initialed, so the process to be called may store the data into a preset storage region, such that the designated application may acquire the data from the storage region directly after being initiated.

In a particular example, when the designated application is in the off state, the process to be called is called continually based on the call frequency and can acquire the corresponding data at each call, so it's required to update the data acquired from the last call, for example, delete the data acquired from the last call and store the data acquired from the current call.

In step 302, when the usage state of the designated application is changed from the off state to the foreground state, the stored data acquired after the process to be called is called is acquired.

After being initiated, the designated application may acquire, from the preset storage region, the data acquired when the designated application is in the off state, and then the operation of resetting the call frequency in the above described embodiment is performed.

The embodiment of the present disclosure may improve the timeliness and accuracy of data acquisition by calling the process to be called continually when the designated application is in the off state, storing the data acquired after the data to be called is called, and then acquiring the data when the designated application is restarted and enters into an on state.

Corresponding to the method for calling a process in the above described exemplary embodiment, a device for calling a process is provided according to another exemplary embodiment, as shown in Fig. 4, the device may include:
a setting module 401 configured to set a call frequency for a process to be called which is associated with a designated application, based on a usage state of the designated application; and
a calling module 402 configured to call the process to be called based on the call frequency.

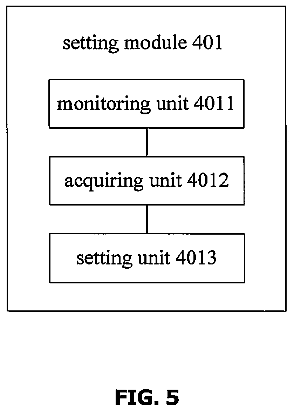

As shown in Fig. 5, the setting module 401 may include:
a monitoring unit 4011 configured to monitor the usage state of the designated application;
a acquiring unit 4012 configured to acquire, when the usage state of the designated application is changed, a call frequency corresponding to the changed usage state of the designated application; and
a setting unit 4013 configured to set the call frequency for the process to be called which is corresponding to the designated application based on the call frequency corresponding to the changed usage state of the designated application.

The usage state may include any one of a foreground state, a background state and an off state, as defined earlier.

A call frequency corresponding to the foreground state is higher than a call frequency corresponding to the background state; and the call frequency corresponding to the background state is higher than a call frequency corresponding to the off state.

As shown in Fig. 4, the device may further include:
a storing module 403 configured to store data acquired after the process to be called is called, when the changed usage state of the designated application is an off state; and
an acquiring module 404 configured to acquire the stored data acquired after the process to be called is called, when the usage state of the designated application is changed from the off state to a foreground state.

In embodiments of the present disclosure, a call frequency for a process to be called which is associated with a designated application is set based on the usage state of the designated application, and then the process to be called is called based on the call frequency. The frequency may be adjusted automatically by controlling a change of the call frequency for the process based on a change of state, so as to achieve effects of calling timely and efficiently in a working state, saving resources and reducing consumption in a non-working state, and acquiring the required data for the designated application in an off state.

In addition, the timeliness and accuracy of data acquisition is improved by calling the process to be called when the designated application is in the off state continually, storing the data acquired after the data to be called is called, and then acquiring the data when the designated application in restarted and enters into an on state.

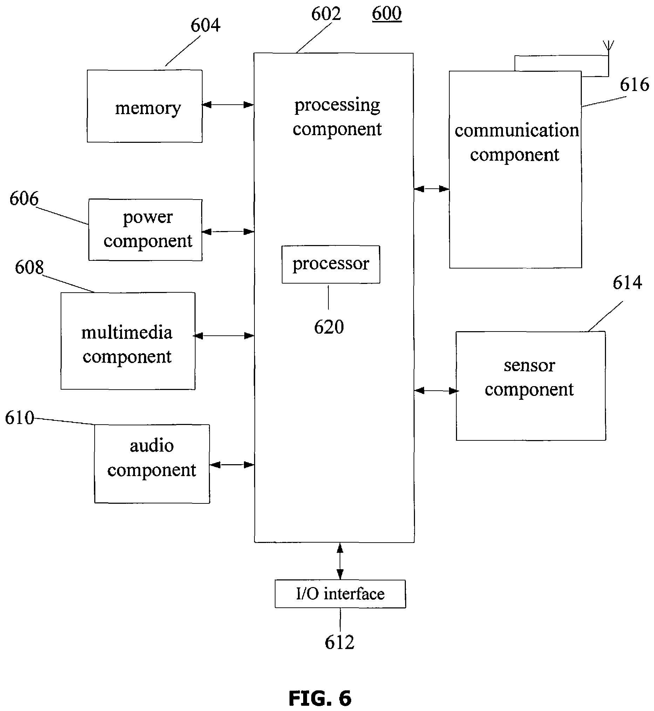

Corresponding to the device for calling a process provided in the above described exemplary embodiments, a terminal 600 is provided according to another exemplary embodiment, as shown in Fig. 6. For example, the terminal 600 may be a mobile phone, a computer, a digital broadcast terminal, a messaging device, a gaming console, a tablet, a medical device, an exercise equipment, a personal digital assistant, and the like.

Referring to Fig. 6, the terminal 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the terminal 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the terminal 600. Examples of such data include instructions for any applications or methods operated on the terminal 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the terminal 600. The power component 606 may include a power management system, one or more power sources, and any other components associated with the generation, management, and distribution of power for the terminal 600.

The multimedia component 608 includes a screen providing an output interface between the terminal 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the terminal 600 is in an operation mode, such as a photographing mode or a video mode. Each of the front camera and the rear camera may be a fixed optical lens system or have optical focusing and zooming capability.

The audio component 610 is configured to output and/or input audio signals. For example, the audio component 610 includes a microphone (MIC) configured to receive an external audio signal when the terminal 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, the peripheral interface modules being, for example, a keyboard, a click wheel, buttons, and the like. The buttons may include, but are not limited to, a home button, a volume button, a starting button, and a locking button.

The sensor component 614 includes one or more sensors to provide status assessments of various aspects of the terminal 600. For instance, the sensor component 614 may detect an open/closed status of theterminal 600, relative positioning of components (e.g., the display and the keypad, of the terminal 600), a change in position of the terminal 600 or a component of the terminal 600, a presence or absence of user contact with the terminal 600, an orientation or an acceleration/deceleration of the terminal 600, and a change in temperature of the terminal 600. The sensor component 614 may include a proximity sensor configured to detect the presence of a nearby object without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the terminal 600 and other devices. The terminal 600 can access a wireless network based on a communication standard, such as WiFi, 2G, or 3G, or a combination thereof. In an exemplary embodiment, the communication component 616 receives a broadcast signal or broadcast associated information from an external broadcast management system via a broadcast channel. In an exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the terminal 600, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium having stored therein instructions that, when executed by the processor of the mobile terminal, cause the terminal 600 to perform the method for calling a process provided in various embodiments of the disclosure. The method may include: setting a call frequency for a process to be called which is associated with a designated application, based on a usage state of the designated application; and calling the process to be called based on the call frequency.

In embodiments of the present disclosure, a call frequency for a process to be called which is associated with a designated application is set based on the usage state of the designated application, and then the process to be called is called based on the call frequency. The frequency may be adjusted automatically by controlling a change of the call frequency for the process based on a change of state, so as to achieve effects of calling timely and efficiently in a working state, saving resources and reducing consumption in a non-working state, and acquiring the required data for the designated application in an off state.

In addition, the timeliness and accuracy of data acquisition is improved by calling the process to be called when the designated application is in the off state continually, storing the data acquired after the data to be called is called, and then acquiring the data when the designated application in restarted and enter into an on state.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for calling a process, implemented by a device, **characterized in that** said method comprises:
setting (101) a call frequency for a process to be called which is associated with a designated application, based on a usage state of the designated application; and
calling (102) the process to be called based on the call frequency.

2. The method of claim 1, wherein setting (101) the call frequency for the process to be called which is associated with the designated application, based on the usage state of the designated application, comprises:
monitoring (2011) the usage state of the designated application;
acquiring (2012), when the usage state of the designated application is changed, a call frequency corresponding to the changed usage state of the designated application; and
setting (2013) the call frequency for the process to be called which is corresponding to the designated application, based on the call frequency corresponding to the changed usage state of the designated application.

3. The method of claims 1 or 2, wherein the usage state comprises any one of a foreground state, a background state and an off state.

4. The method of claim 3, wherein,
a call frequency corresponding to the foreground state is higher than a call frequency corresponding to the background state; and
the call frequency corresponding to the background state is higher than a call frequency corresponding to the off state.

5. The method of any one of claims 2 to 4, wherein after calling (102) the process to be called based on the call frequency, the method further comprising:
storing (301) data acquired after the process to be called is called, when the changed usage state of the designated application is an off state; and
acquiring (302) the stored data acquired after the process to be called is called, when the usage state of the designated application is changed from the off state to a foreground state.

6. A device for calling a process, **characterized in that** it comprises:
a setting module (401) for setting a call frequency for a process to be called which is associated with a designated application, based on a usage state of the designated application; and
a calling module (402) for calling the process to be called based on the call frequency.

7. The device of claim 6, wherein the setting module (401) comprises:
a monitoring unit (4011) for monitoring the usage state of the designated application;
a acquiring unit (4012) for acquiring, when the usage state of the designated application is changed, a call frequency corresponding to the changed usage state of the designated application; and
a setting unit (4013) for setting the call frequency for the process to be called which is corresponding to the designated application based on the call frequency corresponding to the changed usage state of the designated application.

8. The device of claims 6 or 7, wherein the usage state comprises any one of a foreground state, a background state and an off state.

9. The device of claim 8, wherein,
a call frequency corresponding to the foreground state is higher than a call frequency corresponding to the background state; and
the call frequency corresponding to the background state is higher than a call frequency corresponding to the off state.

10. The device of any one of claims 7 to 9, wherein the device further comprises:
a storing module (403) for storing data acquired after the process to be called is called, when the changed usage state of the designated application is an off state; and
a acquiring module (404) for acquiring the stored data acquired after the process to be called is called, when the usage state of the designated application is changed from the off state to a foreground state.

11. A computer program including instructions for executing the steps of a method for calling a process according to any one of claims 1 to 5 when said program is executed by a computer.

12. A recording medium readable by a computer and having recorded thereon a computer program including instructions for executing the steps of a method for calling a process according to any one of claims 1 to 5.
